# EUROPÄISCHE PATENTANMELDUNG

(11) **EP 0 924 583 A2**
(43) Veröffentlichungstag der Anmeldung: **23.06.1999**
(21) Anmeldenummer: 98123546.8
(22) Anmeldetag: 09.12.1998
(51) Int. Cl.: G05B 19/4063

(54) **Verfahren und Anordnung zur Überprüfung von Motorbremsen**

(30) Priorität: 19.12.1997 DE 19756752
(71) Anmelder: Dr. Johannes Heidenhain GmbH, D-83292 Traunreut (DE)
(72) Erfinder: Baumgartner, Alfons Dipl.-Ing., 83224 Grassau (DE); Lengenfelder, Hans Dipl.-Ing., 84453 Mühldorf (DE); Schlick, Helmut, 83368 Weisbrunn (DE)

(57) **Zusammenfassung**

Die vorliegende Erfindung ermöglicht die Überprüfung von mechanischen Bremsen bei Elektromotoren, was für einen sicheren Betriebszustand einer Werkzeugmaschine oder eines Roboters von großer Bedeutung ist. Hierfür wird mindestens ein Motorparameter ermittelt, der sich bei eingelegter und nicht eingelegter Bremse unterscheidet. Liegt ein erwarteter Unterschied des Motorparameters bei angezogener und gelöster Bremse nicht vor, wird eine Fehlfunktion der Bremse erkannt und entsprechende Maßnahmen zur Herstellung eines sicheren Betriebszustands des Elektromotors werden durchgeführt.

## Beschreibung

Die Erfindung betrifft ein Verfahren zur Überprüfung von Motorbremsen eines Elektromotors nach dem Oberbegriff von Anspruch 1 und eine Anordnung zur Durchführung des Verfahrens nach dem Oberbegriff von Anspruch 11.

Aus der EP 380 707 A1 ist ein Verfahren bekannt, um eine Kollision von Teilen einer Werkzeugmaschine, die durch Servo-Motoren angetrieben werden, mit anderen Objekten zu detektieren. Wurde eine Kollision detektiert, wird der Antrieb der Maschinenteile sofort angehalten. Dadurch soll der Schaden an den Maschinenteilen möglichst gering gehalten werden. Bei diesem Verfahren wird ein Wert eines Kollisions-Parameters, der beispielsweise das Drehmoment oder die Geschwindigkeit des jeweils für die Bewegung relevanten Servomotors beinhaltet, periodisch ermittelt und die Änderung dieses Werts detektiert. Sobald diese Änderung einen Schwellwert überschreitet, wird eine Kollision erkannt und der Servomotor angehalten. Um den Servomotor anzuhalten wird durch die Steuerung das Drehmoment des Servomotors auf Null eingestellt. Alternativ kann nach der Detektion einer Kollison auch ein negatives Drehmoment eingestellt werden, das zur bisherigen Geschwindigkeit proportional ist, um den Motor zu bremsen.

Dieses Verfahren weist den Nachteil auf, daß ein Abbremsen des Servomotors durch die Steuerung aktiv gesteuert werden muß. Falls, beispielsweise bei einem Stromausfall, die Steuerung ausfällt, kann aufgrund der Massenträgheit der sich bewegenden Teile der Werkzeugmaschine eine weitere Bewegung und damit ein größerer Schaden nicht verhindert werden. Weiterhin ist keine mechanische Bremse bekannt, die bei einem Ausschalten der Werkzeugmaschine vertikal bewegliche Teile der Werkzeugmaschine fixiert, so daß eine Bewegung aufgrund der Schwerkraft möglich ist und die Maschine dadurch beschädigt wird.

Es liegt auf der Hand, daß bei Werkzeugmaschinen oder Robotern zum Anhalten eines Elektromotors im Fehlerfall nur möglichst kurze Wege benötigt werden dürfen. Dadurch soll die Sicherheit insbesondere für den Bediener erhöht und Schäden an Maschine, Werkzeug und Werkstück verhindert werden. Um dies zu ermöglichen, sind Bremsen vorgesehen, die elektrisch bzw. mechanisch wirken. Bei den elektrisch wirkenden Bremsen wird durch eine entsprechende Veränderung des elektro-magnetischen Feldes im Elektromotor die Drehung des Rotors gebremst. Dafür wird der Motorstrom des Elektromotors durch die Steuerung entsprechend geregelt. Diese Bremsen sind praktisch verschleißfrei. Wenn jedoch kein derartiges elektro-magnetisches Feld mehr erzeugt werden kann, weil z.B. die Stromversorgung oder die Steuerung ausgefallen ist, müssen aus Sicherheitsgründen zusätzliche mechanische Bremsen einen kurzen Bremsweg sowie das Anhalten vertikal beweglicher Maschinenteile, sogenannter vertikaler oder hängender Achsen, sicherstellen.

Diese mechanischen Bremsen weisen jedoch den Nachteil auf, daß im Vergleich zu den elektro-magnetischen Bremsen Verschleiß, Verschmutzung und Alterung zu Fehlfunktionen bis hin zum Ausfall führen können.

Es stellt sich somit die Aufgabe, ein Verfahren und eine Anordnung anzugeben, durch die eine Steuerung einer Werkzeugmaschine oder eines Roboters erkennen kann, ob die mechanischen Bremsen fehlerfrei arbeiten und somit einen sicheren Betrieb ermöglichen.

Diese Aufgabe wird durch die in Anspruch 1 und Anspruch 11 angegebenen Merkmale gelöst.

Das erfindungsgemäße Verfahren weist den Vorteil auf, daß die an einer NC-Werkzeugmaschine oder einem Roboter vorhandenen mechanischen Bremsen regelmäßig auf ihre Funktion überprüft werden können. Weiterhin ist dabei von Vorteil, daß bei einer derartigen Überprüfung bei funktionierenden Bremsen nicht zwangsläufig eine Bewegung der Elektromotoren und damit der Achsen oder der Spindel erfolgen muß und auch bei einem vollständigen Versagen der mechanischen Bremsen nur eine vernachlässigbar geringe Bewegung erfolgt. Dadurch tritt an den mechanischen Bremsen kein Verschleiß auf und für die Überprüfung der Bremsen müssen keine speziellen Spindel- und Achsstellungen angefahren werden, in denen eine Bewegung möglich wäre.

Weiterhin kann durch eine zweikanalige Überprüfung der Bremsen insbesondere anhand unterschiedlicher Kriterien eine sichere Überwachung realisiert werden. Vorteilhaft ist außerdem, daß zur Ermittlung des Motorstroms die bereits für den Motorstromregelkreis vorhandenen Baugruppen zur Ermittlung des Motorstroms und der Rotorstellung des Elektromotors mitbenutzt werden können.

Die Erfindung wird im folgenden anhand der in der Zeichnung dargestellten Ausführungsformen näher erläutert. Es zeigt:
Fig. 1: einen möglichen Ablaufplan für das erfindungsgemäße Verfahren,
Fig. 2: eine Realisierungsform der erfindungsgemäßen Anordnung,
Fig. 3: einen alternativen Ablaufplan für das erfindungsgemäße Verfahren.

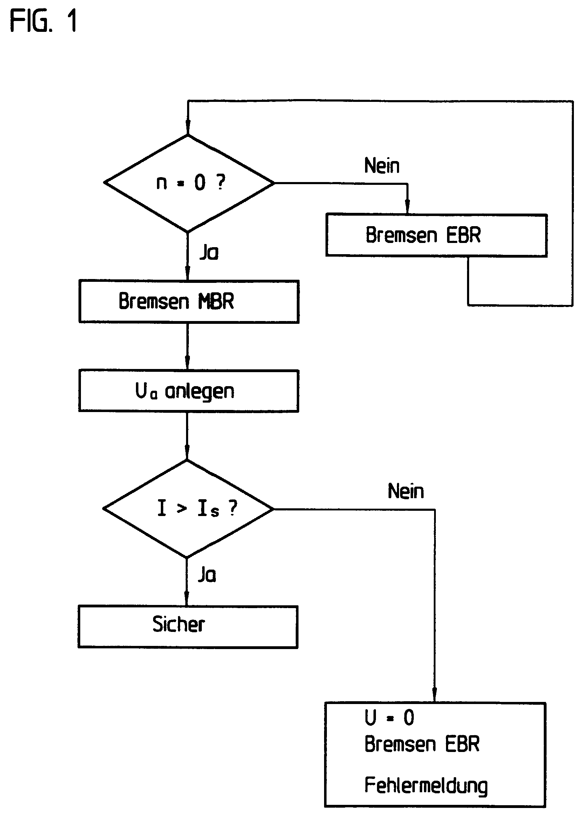

In Fig. 1 ist das erfindungsgemäße Verfahren dargestellt. Sobald nach Einschalten der NC-Werkzeugmaschine oder des Roboters deren Steuerung ohnehin einen Funktionstest durchführt, werden auch die mechanischen Bremsen MBR überprüft. Zusätzlich kann die Funktion der mechanischen Bremsen MBR in bestimmten Zeitabständen überprüft werden. Das Verfahren zur Überprüfung der mechanischen Bremsen MBR wird durch die Steuereinheit der Werkzeugmaschine abgearbeitet.

Sofern dies nicht bereits der Fall ist, wird der Elektromotor EM, welcher der zu überprüfenden mechanischen Bremse MBR zugeordnet ist, zunächst auf Drehzahl Null gebracht. Dies kann auf beliebige Weise erfolgen, beispielsweise mittels der elektro-magnetischen Bremse EBR.

Anschließend wird im Stillstand ausschließlich die mechanische Bremse MBR eingelegt, so daß der Elektromotor EM nur durch die mechanische Bremse MBR gebremst wird.

Danach wird dem Elektromotor EM bei eingelegter mechanischer Bremse MBR ein definierter Anlaufstrom Ia zugeleitet, der ein definiertes Drehmoment im Elektromotor EM erzeugt, so daß der Elektromotor EM ohne eingelegte mechanische Bremse MBR sicher anlaufen würde. Dieses definierte Drehmoment ist vorzugsweise nur so groß, daß eine funktionierende, eingelegte mechanische Bremse MBR keine Drehung im Elektromotor EM zuläßt.

Wird eine definierte Anlaufspannung Ua an den Elektromotor EM angelegt, stellt sich ein bestimmter Motorstrom I ein, der bei einer Belastung des Elektromotors EM durch die eingelegte mechanische Bremse MBR wesentlich größer ist, als bei einer Fehlfunktion der mechanischen Bremse MBR. Bei einer Fehlfunktion der mechanischen Bremse MBR würde der Elektromotor EM aufgrund der geringeren Bremswirkung bei gleicher Anlaufspannung Ua in Rotation versetzt. Durch die aufgrund der Rotation im Elektromotor EM erzeugte elektro-magnetische Kraft (Gegen-EMK) wäre der Motorstrom I kleiner.

Sollte die mechanische Bremse MBR defekt sein, erkennt dies die Steuerung ST daher durch einen Vergleich eines gespeicherten Schwellwertes Is für den Motorstrom bei funktionierender mechanischer Bremse MBR mit dem tatsächlichen Motorstrom I. Bei zu großem Motorstrom I schaltet die Steuerung sofort die Anlaufspannung Ua ab und aktiviert die elektro-magnetische Bremse EBR, so daß nur eine geringfügige Drehbewegung des Elektromotors EM möglich ist. Zusätzlich aktiviert die Steuerung ST eine Fehlermeldung, die an den Benutzer ausgegeben wird, und bremst auch die anderen Elektromotoren der Maschine, die mit dem fehlerhaften Elektromotor EM in einem Wirkzusammenhang stehen, mittels deren elektro-magnetischen Bremsen EBR unverzüglich ab.

Dies ist nur eine Möglichkeit die mechanische Bremse MBR auf deren Wirksamkeit zu überprüfen. Alternativ zur Vorgabe einer konstanten Spannung und Überprüfung des im Elektromotor EM resultierenden Stroms kann auch ein konstanter Strom vorgegeben werden und anhand der daraus resultierenden Motorspannung die mechanischen Bremse MBR überprüft werden. Von diesem Fall soll in der weiteren Beschreibung ausgegangen werden.

Wird ein definierter Anlaufstrom Ia dem Elektromotor EM zugeleitet, stellt sich eine bestimmte Motorspannung U ein, die bei einer Belastung des Elektromotors EM durch die eingelegte mechanische Bremse MBR wesentlich kleiner ist, als bei einer Fehlfunktion der mechanischen Bremse MBR. Bei einer Fehlfunktion der mechanischen Bremse MBR würde der Elektromotor EM aufgrund der geringeren Bremswirkung bei gleichem Anlaufstrom Ia in Rotation versetzt. Durch die aufgrund der Rotation im Elektromotor EM erzeugte elektromagnetische Kraft (Gegen-EMK) wäre die Motorspannung U größer.

Sollte die mechanische Bremse MBR defekt sein, erkennt dies die Steuerung ST durch einen Vergleich eines gespeicherten Schwellwertes Is für die Motorspannung bei funktionierender mechanischer Bremse MBR mit der tatsächlichen Motorspannung U. Bei zu geringer Motorspannung U schaltet die Steuerung sofort den Anlaufstrom Ia ab und aktiviert die elektro-magnetische Bremse EBR, so daß nur eine geringfügige Drehbewegung des Elektromotors EM möglich ist. Zusätzlich aktiviert die Steuerung ST eine Fehlermeldung, die an den Benutzer ausgegeben wird, und bremst auch die anderen Elektromotoren der Maschine, die mit dem fehlerhaften Elektromotor EM in einem Wirkzusammenhang stehen, mittels deren elektro-magnetischen Bremsen EBR unverzüglich ab.

Abhängig davon, ob ein Anlaufstrom Ia oder eine Anlaufspannung Ua vorgegeben wird, sind außerdem unterschiedliche Schwellwerte Is abzuspeichern. Dabei wird der Schwellwert Is bei der Einstellung des betreffenden Elektromotors EM an der Maschine oder bereits bei dessen Herstellung in einem Speicher SP gespeichert. Weiterhin kann für jede zu überprüfende mechanische Bremse MBR aller an einer Maschine vorhandenen Elektromotore EM und für jede Drehrichtung jedes Elektromotors EM ein eigener Schwellwert Is abgespeichert werden.

Alternativ zu einer einmaligen Abspeicherung der Schwellwerte Is kann bei jeder Überprüfung der mechanischen Bremse MBR der Elektromotor EM zunächst ohne Belastung, d.h. ohne Aktivierung der mechanischen Bremse MBR, betrieben und der sich bei einem definierten Anlaufstrom Ia einstellende Wert für die Motorspannung U ermittelt werden. Dieser dient als Schwellwert Is. Anschließend wird der Elektromotor EM abgebremst und die mechanische Bremse MBR aktiviert sowie erneut der definierte Anlaufstrom Ia dem Elektromotor EM zugeleitet. Die dann ermittelte Motorspannung U wird mit dem vorher ermittelten Schwellwert Is verglichen. Bei einem nur geringen Unterschied wird eine Fehlfunktion der mechanischen Bremse MBR durch die Steuerung ST erkannt und die oben beschriebenen Maßnahmen zur Herstellung eines sicheren Betriebszustands werden ausgelöst.

In einer alternativen Ausführungsform kann eine Drehung des Rotors des Elektromotors EM bei fehlerhafter mechanischer Bremse MBR zusätzlich oder alternativ durch Meßsysteme, wie den Drehgeber DG des Elektromotors EM und/oder durch das gegebenenfalls vorhandene Längenmeßsystem LS für die Lageregelung der Steuerung erkannt werden.

Nachdem, wie oben detailliert beschrieben, die mechanische Bremse MBR eingelegt und dem Elektromotor EM ein Anlaufstrom Ia zugeleitet wurde, detektiert die Steuerung ST bei einer defekten mechanischen Bremse MBR mittels des dem Elektromotor EM zugeordneten Drehgebers DG oder Längenmeßsystems LS bereits eine sehr geringe Drehbewegung des Elektromotors EM und schaltet daraufhin sofort den Anlaufstrom Ia ab. Zusätzlich aktiviert die Steuerung ST eine Fehlermeldung, die an den Benutzer ausgegeben wird, und bremst auch die anderen Elektromotoren der Maschine, die mit dem fehlerhaften Elektromotor EM in einem Wirkzusammenhang stehen, mittels deren elektro-magnetischen Bremsen EBR unverzüglich ab. Dadurch ist sichergestellt, daß auch im Fehlerfall nur eine vernachlässigbar kleine Bewegung des Elektromotors EM möglich ist. Außerdem wird sichergestellt, daß durch weitere Elektromotoren, die mit dem fehlerhaften in einem Wirkzusammenhang stehen, ebenfalls abgebremst werden, um Schaden an der Maschine zu verhindern. Ein Wirkzusammenhang kann beispielsweise dadurch bestehen, daß der Elektromotor EM mit der schadhaften mechanischen Bremse MBR einer der drei Achsantriebe für eine dreidimensionale Bewegung eines Werkzeugs einer Werkzeugmaschine ist.

Bei funktionierender mechanischer Bremse MBR erfolgt keine Bewegung des Elektromotors EM, da der Anlaufstrom Ia so gering ist, daß die mechanische Bremse MBR das durch den Anlaufstrom Ia resultierende Drehmoment gerade noch halten kann.

In einer weiteren alternativen Ausführungsform wird die mechanische Bremse MBR in beiden Laufrichtungen des Elektromotors EM überprüft. Dafür wird an den Elektromotor EM nach Anlegen des Anlaufstroms Ia und Überprüfen der mechanischen Bremse MBR auch noch der invertierte Anlaufstrom -Ia angelegt und die mechanische Bremse wird erneut überprüft. Dadurch können laufrichtungsabhängige Veränderungen der Bremswirkung zusätzlich berücksichtigt werden.

Eine weitere Alternative stellt die Ausführungsform dar, daß bei Drehzahl Null des zu überprüfenden Elektromotors EM die mechanische Bremse MBR eingelegt wird. Anschließend wird der Anlaufstrom Ia so lange erhöht, bis durch mindestens eines der mit dem Elektromotor EM gekoppelten Meßsysteme eine Bewegung erkannt wird. Danach wird der Anlaufstrom Ia sofort verringert. Dadurch kann ermittelt werden, wie groß die Bremswirkung der mechanischen Bremse MBR tatsächlich ist. Durch einen Vergleich mit einem Mindestwert Is für die Motorspannung U kann die Steuerung ST erkennen, ob die mechanische Bremse MBR eine noch ausreichende Bremswirkung aufweist.

Die Überprüfung der mechanischen Bremsen MBR mehrerer Elektromotoren EM einer NC-Werkzeugmaschine oder eines Roboters kann sowohl gleichzeitig als auch nacheinander erfolgen.

Dabei kann berücksichtigt werden, ob der zur mechanischen Bremse MBR gehörende Elektromotor EM bereits im Stillstand unter Belastung steht, wie dies beispielsweise bei einem Elektromotor EM für die Bewegung von Maschinenteilen entlang einer vertikalen Achse einer NC-Werkzeugmaschine der Fall ist. In einem solchen Fall wird aufgrund der Gewichtskraft der Maschinenteile eine laufrichtungsabhängig unterschiedliche Bremswirkung durch die Steuerung ST erkannt werden. Dennoch darf auch in diesem Fall eine Mindest-Bremswirkung durch die mechanische Bremse MBR nicht unterschritten werden.

Um die Bremswirkung der mechanischen Bremse MBR eines Elektromotors EM für eine vertikale Achse zu überprüfen, wird in einer weiteren alternativen Ausführungsform prinzipiell wie bereits beschrieben vorgegangen. Es wird bei Stillstand des Elektromotors EM für die vertikale Achse die zugehörige mechanische Bremse MBR des Elektromotors EM eingelegt. Dann wird der diesem Elektromotor EM zugeleitete Anlaufstrom Ia verändert. Dabei wird berücksichtigt, daß für den Stillstand dem Elektromotor EM aufgrund der Gewichtskraft bereits ein Haltestrom zugeleitet wird, indem dieser Haltestrom als Offsetwert für den Motorstrom berücksichtigt wird. Ausgehend von diesem Haltestrom wird der Motorstrom um den Wert des Anlaufstroms Ia verändert. Anschließend wird, wie oben beschrieben, überwacht, ob aufgrund dieser Veränderung des Motorstroms einer der Motorparameter (Drehzahl, Lageistwert, Motorspannung) ein Versagen der mechanischen Bremse MBR erkennen läßt. Ist dies der Fall, wird bei dem Elektromotor EM für die vertikale Achse unverzüglich wieder der Haltestrom durch die Steuerung ST eingestellt, so daß keine Schäden entstehen können. Weiterhin werden auch alle anderen Elektromotoren EM stillgesetzt und es wird durch die Steuereinheit ST eine Fehlermeldung an den Benutzer ausgegeben.

Eine weitere Möglichkeit die Wirkung der mechanischen Bremse MBR zu detektieren besteht in der Auswertung der Dynamik des Drehzahlregelkreises des Elektromotors EM. Da durch eine Veränderung der Mechanik des Elektromotors EM, welche durch Einlegen der mechanischen Bremse MBR bewirkt wird, auch die Dynamik des Drehzahlregelkreises dieses Elektromotors EM verändert wird, kann zur Detektion der Bremswirkung der mechanischen Bremse MBR die Änderung der Dynamik des Drehzahlregelkreises ermittelt werden. Wird eine funktionierende mechanische Bremse MBR, die ausreichend Bremswirkung aufweist, eingelegt, so fängt der Drehzahlregelkreis an zu schwingen. Ein Maß für die Bremswirkung der mechanischen Bremse MBR ist dabei die im Drehzahlregelkreis auftretende Schwingungsamplitude. Wird somit durch die Steuerung ST detektiert, daß im Drehzahlregelkreis ein Mindestwert einer Schwingungsamplitude überschritten wird, während die mechanische Bremse MBR eingelegt ist, weist die mechanische Bremse MBR ausreichend Bremswirkung auf. Ist die Schwingungsamplitude im Drehzahlregelkreis jedoch zu gering, wenn die mechanische Bremse MBR eingelegt ist, erkennt die Steuereinheit daran, daß die Bremswirkung der mechanischen Bremse MBR nicht ausreicht.

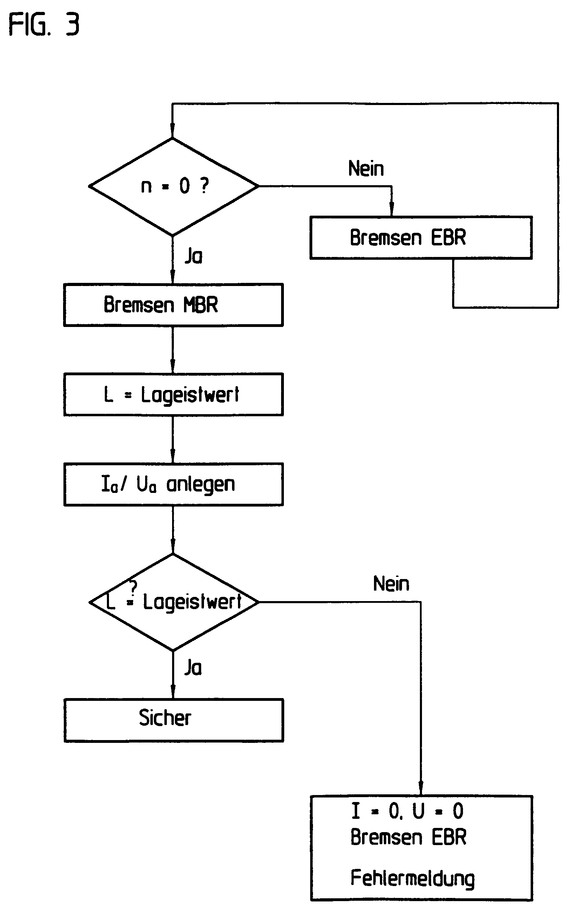

Soll eine sichere, zweikanalige Überprüfung der mechanischen Bremse MBR durchgeführt werden, können zwei oder mehr der beschriebenen Möglichkeiten zur Überprüfung kombiniert werden. Dabei überwacht ein erster Prozessor CCU der Steuerung ST einen ersten Motorparameter, z.B. die Motorspannung U, wie in Fig. 1 dargestellt. Durch einen Vergleich mit einem abgespeicherten Schwellwert Is, wird auf eine erste Weise erkannt, ob die mechanische Bremse MBR funktioniert. Zusätzlich überwacht ein zweiter Prozessor MCU gleichzeitig einen zweiten Motorparameter, z.B. die Lageistwerte eines Längenmeßsystems LS, wie in Fig. 3 dargestellt. Sobald eine Veränderung des Lageistwertes auftritt, reicht die Bremswirkung der mechanischen Bremse MBR nicht mehr aus und es wird eine Fehlfunktion der mechanischen Bremse MBR durch den Prozessor MCU auf eine zweite Weise erkannt. Alternativ oder zusätzlich zu den beiden genannten Möglichkeiten die mechanische Bremse MBR zu überprüfen kann auch jede andere der oben beschriebenen alternativen Überwachungsverfahren benutzt werden.

Da sowohl die Erfassung der Motorparameter des Elektromotors EM mittels unabhängiger Systeme, wie Motorstromdetektor, Drehgeber DG und/oder Längenmeßsystem LS, als auch die Weiterverarbeitung der Signale durch unabhängige Prozessoren CCU und MCU zweikanalig erfolgt, ist die für eine sichere Überprüfung geforderte Redundanz gegeben.

Sobald durch nur einen Prozessor CCU oder MCU eine Fehlfunktion der mechanischen Bremse MBR erkannt wurde, wird der Motorstrom I des Elektromotors EM abgeschaltet und dieser durch die elektro-magnetische Bremse EBR gebremst. Weiterhin wird eine Fehlermeldung ausgegeben und alle Elektromotoren EM der Maschine werden durch die Steuerung ST stillgesetst.

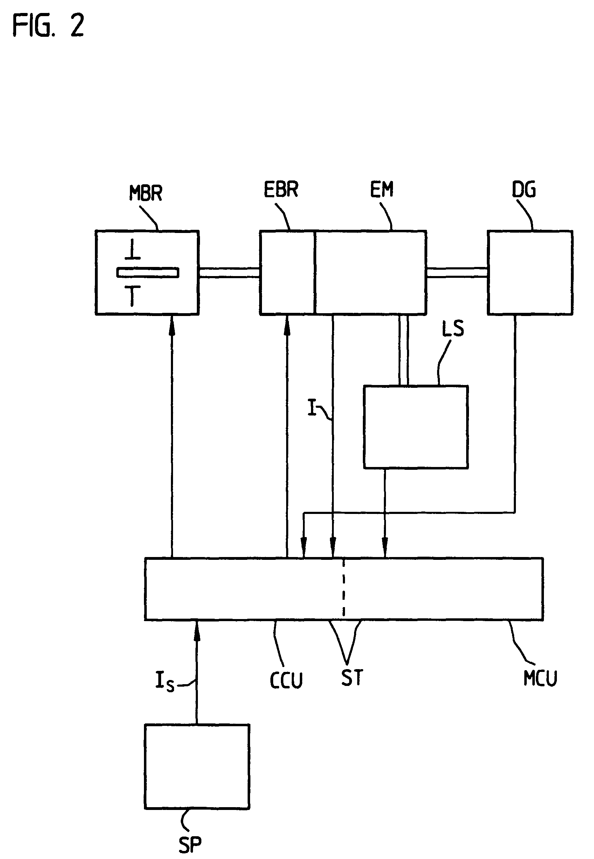

Fig. 2 zeigt eine erfindungsgemäße Anordnung zur Überprüfung einer mechanischen Motorbremse MBR eines Elektromotors EM. Zur Vereinfachung ist nicht die gesamte Maschine, sondern nur ein Elektromotor EM dargestellt, der mit einer mechanischen Bremse MBR, einem Drehgeber DG und einem Längenmeßsystem LS mechanisch gekoppelt ist. Weiterhin weist der Elektromotor EM eine integrierte elektro-magnetische Bremse EBR auf. Die Ausgangssignale des Längenmeßsystems LS, des Drehgebers DG und eines Speichers SP für einen oder mehrere Schwellwerte Is werden an eine Steuerung ST, bestehend aus zwei Prozessoren CCU und MCU weitergeleitet. Die Steuerung ST ist mit der mechanischen Bremse MBR, der elektro-magnetischen Bremse EBR, und dem Elektromotor EM verbunden. An diese Baugruppen werden durch die Steuereinheit ST Steuersignale bzw. der Motorstrom I übertragen.

Bei einer NC-Werkzeugmaschine, die Elektromotoren EM für die Achsantriebe der x-, y- und z-Achse sowie eventueller weiterer Achsen und für den Spindelantrieb aufweist, werden im Speicher SP regelmäßig mehrere Schwellwerte Is für die Motorströme abgespeichert. Dadurch wird berücksichtigt, daß für einen Achsantrieb und einen Spindelantrieb sicherlich unterschiedliche Elektromotoren EM benutzt werden. Weiterhin können für einen Elektromotor EM auch laufrichtungsabhängige Schwellwerte Is abgespeichert sein, durch die, z.B. bei der z-Achse, berücksichtigt wird, daß dies eine vertikale Achse ist.

## Patentansprüche

1. Verfahren zur Überprüfung von Motorbremsen für Elektromotoren (EM), insbesondere von NC-Werkzeugmaschinen oder Robotern, wobei der Elektromotor (EM) mit einer mechanischen Motorbremse (MBR) gekoppelt ist, dadurch gekennzeichnet, daß die zu überprüfende mechanische Bremse (MBR) aktiviert wird, wodurch eine Drehung des Rotors des Elektromotors (EM) verhindert wird, daß kurzzeitig der dem Elektromotor (EM) zugeleitete definierte Anlaufstrom (Ia) oder die an den Elektromotor (EM) angelegte Anlaufspannung (Ua) verändert wird, daß ein erster Wert (I) von mindestens einem sich dadurch verändernden Motorparameter ermittelt wird, daß dieser erste Wert (I) mit einem zweiten Wert (Is) des Motorparameters verglichen wird, welcher bei gleichem Anlaufstrom (Ia) oder gleicher Anlaufspannung (Ua) aber nicht aktivierter mechanischer Bremse (MBR) ermittelt wurde und daß abhängig vom Unterschied zwischen erstem Wert (I) und zweitem Wert (Is) des Motorparameters ein Versagen der mechanischen Bremse (MBR) erkannt wird.

2. Verfahren nach Anspruch 1, dadurch gekennzeichnet, daß bei Vorgabe der Anlaufspannung (Ua) als Motorparameter der Motorstrom (I) und bei Vorgabe des Anlaufstroms (Ia) als Motorparameter die Motorspannung (U) gewählt wird und daß der Unterschied zwischen erstem (I) und zweitem Wert (Is) bei einer fehlerfreien mechanischen Bremse (MBR) nicht zu klein sein darf.

3. Verfahren nach Anspruch 1, dadurch gekennzeichnet, daß als Motorparameter der Lageistwert (I) gewählt wird und daß der Unterschied zwischen erstem (I) und zweitem Wert (Is) bei einer fehlerfreien mechanischen Bremse (MBR) nicht zu klein sein darf.

4. Verfahren nach Anspruch 1, dadurch gekennzeichnet, daß als Motorparameter (I) die Drehzahl des Elektromotors (EM) benutzt wird und daß der Unterschied zwischen erstem (I) und zweitem Wert (Is) bei einer fehlerfreien mechanischen Bremse (MBR) nicht zu klein sein darf.

5. Verfahren nach Anspruch l, dadurch gekennzeichnet, daß als Motorparameter (I) die Schwingungsamplitude des Drehzahlregelkreises des Elektromotors (EM) benutzt wird und daß bei einer fehlerfreien mechanischen Bremse (MBR) die Schwingungsamplitude im Drehzahlregelkreis einen Mindestwert überschreiten muß.

6. Verfahren nach einem der Ansprüche 1 bis 5, dadurch gekennzeichnet, daß zwei oder mehrere Motorparameter ausgewählt werden und deren Werte (I, Is) in voneinander unabhängigen Kanälen ermittelt und verarbeitet werden, wodurch eine sichere Überwachung realisiert wird und daß die beiden unabhängigen Kanäle zumindest teilweise durch unabhängige Prozessoren (MCU, CCU) der Steuerung (ST) realisiert werden.

7. Verfahren nach einem der Ansprüche 1 bis 6, dadurch gekennzeichnet, daß der zweite Wert (Is) für einen Motorparameter einmalig bei der Herstellung oder Inbetriebnahme der Maschine ermittelt und in einem Speicher (SP) abgespeichert wird oder daß der zweite Wert (Is) für einen Motorparameter bei jeder Überprüfung der mechanischen Bremsen (MBR) erneut ermittelt wird.

8. Verfahren nach einem der Ansprüche 1 bis 7, dadurch gekennzeichnet, daß der dem Elektromotor (EM) zugeleitete definierte Anlaufstrom (Ia) oder die Anlaufspannung (Ua) gemäß einer Sprungfunktion oder einer Rampenfunktion verändert wird und daß die Dauer der Sprungfunktion zeitlich fest vorgegeben ist und die Dauer der Rampenfunktion durch eine einsetzende Drehbewegung des Elektromotors (EM) begrenzt wird.

9. Verfahren nach einem der Ansprüche 1 bis 8, dadurch gekennzeichnet, daß bei der Ermittlung des dem Elektromotor (EM) zugeleiteten definierten Anlaufstroms (Ia) oder Anlaufspannung (Ua) ein eventueller Haltestrom oder eine Haltespannung eines Elektromotors (EM) für einen Antrieb entlang einer vertikalen Achse berücksichtigt wird.

10. Verfahren nach einem der Ansprüche 1 bis 9, dadurch gekennzeichnet, daß der zweite Werts (Is) für einen Motorparameter für beide Drehrichtungen des Elektromotors (EM) ermittelt wird.

11. Anordnung zur sicheren Überprüfung von Motorbremsen für Elektromotoren (EM) bei NC-Werkzeugmaschinen oder Robotern, bei dem ein Elektromotor (EM) mit einer mechanischen Bremse (MBR), einer elektromagnetischen Bremse (EBR) und mindestens einem Meßsystem (DG, LS) mechanisch gekoppelt ist und bei dem eine Steuerung (ST) mit dem Elektromotor (EM), der mechanischen Bremse (MBR), der elektro-magnetischen Bremse (EBR) und mindestens einem Meßsystem (DG, LS) verbunden ist, dadurch gekennzeichnet, daß die Steuerung (ST) mit einem Speicher (SP) zur Speicherung von Werten für Motorparameter (Is) verbunden ist.

12. Maschine, insbesondere Werkzeugmaschine oder Roboter, welche Elektromotoren (EM) zur Bewegung von Maschinenkomponenten aufweist, dadurch gekennzeichnet, daß die für die Antriebe der Maschinenkomponenten vorgesehenen Elektromotoren (EM) jeweils eine Anordnung zur sicheren Überprüfung von Motorbremsen (MBR) für Elektromotoren (EM) beinhalten.
